# EUROPÄISCHE PATENTSCHRIFT

(11) **EP 1 303 341 B1**
(45) Veröffentlichungstag und Bekanntmachung des Hinweises auf die Patenterteilung: **27.09.2006**
(21) Anmeldenummer: 01960501.3
(22) Anmeldetag: 13.07.2001
(51) Int. Cl.: B01D 39/20, B01D 46/24, F01N 3/021, B01D 53/94

(54) **KERAMISCHES FILTERELEMENT UND VERFAHREN ZU SEINER HERSTELLUNG**
CERAMIC FILTER ELEMENT AND METHOD FOR PRODUCTION THEREOF
ELEMENT FILTRANT EN CERAMIQUE ET PROCEDE POUR SA PRODUCTION

(30) Priorität: 13.07.2000 DE 10034045
(43) Veröffentlichungstag der Anmeldung: 23.04.2003
(73) Patentinhaber: PALL CORPORATION, East Hills, New York 11548 (US); UVE Umweltmanagement & -Planung GmbH, 10777 Berlin (DE)
(72) Erfinder: HEIDENREICH, Steffen, 76351 Linkenheim-Hochstetten (DE); RÖSSLER, Max-Eckhard, 74219 Möckmühl-Züttlingen (DE); WALCH, Astrid, 74594 Kressberg (DE); GUTMANN, Manfred, 13051 Berlin (DE); CHUDZINSKI, Sven, 10247 Berlin (DE)
(74) Vertreter: Wössner, Gottfried
(86) Internationale Anmeldenummer: PCT/EP2001/008171
(87) Internationale Veröffentlichungsnummer: WO 2002/005928

(56) Entgegenhaltungen:
- EP-A- 0 819 459
- US-A- 4 420 316
- US-A- 5 141 714
- US-A- 5 195 319
- US-A- 5 645 804

## Beschreibung

Die Erfindung betrifft ein keramisches Filterelement, insbesondere eine Filterkerze, gemäß dem Oberbegriff des Patentanspruchs 1. Die Erfindung bezieht sich auch auf Verfahren zur Herstellung solcher Filterelemente.

Die Reduktion von Stickoxiden aus Gasen wird durch selektive Reaktion der Stickoxide mit den Reduktionsmitteln in Feststoffkatalysatoren durchgeführt. Damit eine hinreichend große katalytische Aktivität erreicht wird und um die Salzablagerung auf der Katalysatoroberfläche auszuschließen, die zu einer Deaktivierung des Katalysators führt, sind entsprechend hohe Gastemperaturen erforderlich. Beispielsweise werden Reduktionskatalysatoren zur Rauchgasreinigung in Kraftwerken im Rauchgasstrom zwischen Kessel und Luftvorwärmer bei Temperaturen von etwa 300°C bis 350°C eingesetzt.

Das keramische Katalysatormaterial wird dabei zumeist in Form von starren Platten oder von Wabenkörpern, teilweise aber auch in Form von Schüttschichten, angeordnet.

Bei den sogenannten Low-Dust-Verfahren schaltet man den Wabenkörpern oder Plattenkatalysatoren ein Heißgaselektrofilter zur weitgehenden Abtrennung des Staubes vor. Bei den sogenannten High-Dust-Verfahren passiert das Gas ohne vorherige Entstaubung den mit einem Katalysator gefüllten Reaktor. Die einzelnen Katalysatorelemente müssen über entsprechend große freie Strömungskanäle für das Gas verfügen, um Verstopfungen zu vermeiden.

Den genannten Verfahrensvarianten ist gemeinsam, daß für die Stickoxidabscheidung zusätzlich zu den bereits bestehenden Apparaten und Einrichtungen zur Niederschlagung von anderen Schadstoffkomponenten weitere voluminöse und aufwendige Apparate hinzukommen. Eine derart aufwendige Gasreinigungstechnik wird insbesondere dann nachteilig, wenn es um die Behandlung vergleichsweise kleiner Gasströme geht.

Es wird daher in der DE 36 34 360 vorgeschlagen, daß die stiekoxidhaltigen Gase mit dem Reduktionsmittel gemischt und daß die Mischung durch mindestens ein katalytisch wirkendes Filterelement geleitet wird, das aus einem keramischen Trägermaterial und den katalytisch wirksamen Substanzen besteht. Das katalytisch wirkende Filterelement wird auch, zur Entstaubung der stickoxidhaltigen Gase verwendet. Das Filterelement besteht entweder aus Filzen oder Vliesen, die aus Fasern des keramischen Trägermaterials durch Verdichtung hergestellt und mit den katalytisch wirkenden Substanzen dotiert worden sind, oder aus porösen Sinterkörpern, die aus Granalien des keramischen Trägermaterials durch Sintern hergestellt und mit den katalytisch wirkenden Substanzen dotiert worden sind. Das Filterelement kann die Form einer Filterkerze aufweisen. Das Dotieren des keramischen Trägermaterials in den katalytisch wirkenden Substanzen erfolgt dadurch, daß diese Substanzen vor, während oder nach der Herstellung der Filze, Vliese oder Sinterkörper auf das keramische Trägermaterial aufgebracht werden. Dies kann beispielsweise durch Tränken der Filterelemente mit Salzlösung und anschließendes Erhitzen der mit den Salzen dotierten Filterelemente erfolgen.

Aus der DE 37 05 793 ist eine Filtervorrichtung zur Gasreinigung bekannt, die einen einzigen rohrförmigen Körper aus hitzebeständiger Schaumkeramik aufweist, der gleichzeitig als Staubfilter und mit entsprechender Beschichtung als Katalysator wirksam ist.

In der EP 0 470 659 wird ein Verfahren zur Abtrennung von Staub und organischen Verbindungen aus sauerstoffhaltigen Gasen, insbesondere aus Verbrennungsabgäsen, beschrieben. Hierbei wird das zu reinigende Abgas durch mindestens ein katalytisch wirkendes Filterelement geleitet, das aus einem keramischen Trägermaterial und den katalytisch wirksamen Substanzen zusammengesetzt ist. Das, Filterelement kann aus einem porösen Sinterkörper bestehen, der aus Granalien des keramischen Trägermaterials durch Sintern hergestellt und mit den katalytisch wirkenden Substanzen dotiert worden ist.

Die WO 9012950 beschreibt einen Dieselrußfilter, der aus Wabenkörpern besteht, von dem die ersten Wabenkörper mit einer ersten Oberflächenschicht versehen sind, die in ansich bekannter Weise katalytisch die Umsetzung von Stickoxiden und Kohlenmonoxid zu Stickstoff bzw. Kohlendioxid bewirken, während die zweiten Wabenkörper mit einer zweiten Oberflächenschicht versehen sind und die in ansich bekannter Weise katalytisch eine Herabsetzung der Zündtemperatur des hier anhaftenden Rußes bewirken.

Aus der WO 9803249 ist eine Gasreinigungsvorrichtung in Form einer Filterkerze bekannt. Die Filterkerze weist an der Außenseite eine Membranschicht aus ultrafeinen Siliziumkarbidteilchen auf, um Staubpartikel herauszufiltern. In Strömungsrichtung nach innen folgt eine katalytisch wirksame Schicht aus gesintertem Siliziumkarbidpulver. Als Katalysator ist eine Vanadium-Titan-Verbindung vorgesehen, mit der der Siliziumkarbidfilter imprägniert ist. Die Filterkerze wird durch eine nachträgliche Beschichtung eines porösen Elementes hergestellt, was den Nachteil hat, daß die poröse Schicht nicht durchgehend gleichmäßig im Porenraum aufgebracht werden kann und somit keine homogene Verteilung des Katalysatormaterials gegeben ist. Zusätzlich besteht das Problem der Haftung der aufgebrachten Schicht auf den Siliziumkarbidpartikeln, wobei erschwerend hinzu kommt, daß im Bereich der Heißgasfiltration Temperaturwechselbeanspruchungen auftreten, die ein Ablösen der Beschichtung unterstützen können.

Aus der EP 0 819 459 A1 ist ein gesintertes poröses Metallfilter bekannt, bei dem in den Zwischenräumen zwischen den gesinterten Metallpartikeln Katalysatorpartikel eingelagert werden.

Die US-Patentschrift US 5,645,804 beschreibt einen porösen hitzebeständigen Körper, dessen Oberfläche mit einer Schicht eines Keramikpulvers überzogen wird, welches der Entfernung von NOₓ aus einem zu reinigenden Abgasstrom dient.

Es ist daher Aufgabe der Erfindung, ein keramisches Filterelement bereitzustellen, das für die Heißgasfiltration eingesetzt werden kann, einen größeren Wirkungsgrad aufweist und bei dem nicht die Gefahr besteht, daß sich die katalytisch wirkenden Komponenten aus dem Filter ablösen.

Diese Aufgabe wird mit einem eingang genannten keramischen Filterelement gelöst, bei welchem das Bindermaterial Katalysatormaterial aufweist oder mindestens teilweise durch das Katalysatormaterial ersetzt ist und bei welchem die Stützmaterialpartikel über das Katalysator- und/oder über das Bindermaterial miteinander verbunden sind.

Dadurch, daß die Stützmaterialpartikel über die Katalysator- und/oder Bindermaterialien miteinander verbunden sind, ist der Abstand der Stützmaterialpartikel größer als bei Filterelementen, bei denen zuerst die Stützmaterialpartikel gesintert und anschließend die Binder/Katalysatormaterialien eingebracht werden. Die Binder/Katalysatormaterialien bilden vorzugsweise stegartige Verbindungen zwischen den Srützmaterialpartikeln aus, wobei zwischen den Stegen Freiräume zum Durchtritt des zu filtrierenden Gases verbleiben. Die Durchströmung wird bei höherem Wirkungsgrad verbessert. Pro Volumeneinheit steht im Filterelement außerdem mehr Katalysatormaterial zur Verfügung, wodurch der Wirkungsgrad des Filterelements gegenüber herkömmlichen Filterelementen zusätzlich erhöht wird.

Es hat sich auch überraschend herausgestellt, daß bei dieser Struktur ein Herauslösen der katalytischen Komponenten verhindert wird.

Der Wirkungsgrad des Filterelementes wird dadurch weiter erhöht, daß das Bindermaterial entweder Katalysatormaterial aufweist oder durch Katalysatormaterial teilweise ersetzt ist.

Das Katalysatormaterial übernimmt in der erfindungsgemäßen Struktur gleichzeitig auch eine Binderfunktion für die Stützmaterialpartikel, so daß auf reines Bindermaterial teilweise oder ganz verzichtet werden kann. In dem Maße, wie das Bindermaterial reduziert wird, kann der Katalysatoranteil erhöht werden.

Vorteilhafterweise liegen die Katalysator- und Bindermaterialien als Verbundpartikel vor. Diese Verbundpartikel können aus 90 bis 99 Gew.-% Katalysatormaterial und Rest Bindermaterial bestehen.

Das Katalysatormaterial wird bereits bei der Herstellung des keramischen Filterelementes eingebunden, wodurch eine homogene Verteilung des Katalysatormaterials im Filterelement erzielt wird. Dadurch wird der Wirkungsgrad des Filterelementes gegenüber den herkömmlichen keramischen Filterelementen ebenfalls erhöht.

Vorzugsweise besteht das Katalysatormaterial aus Oxiden der seltenen Erden, aus Aluminaten, aus Silikaten, aus Titanaten oder Titandioxid oder besonders bevorzugt Kalziumaluminat. Dabei kann es sich um eine Substanz einer der genannten Stoffklassen handeln, um Gemische aus mehreren Substanzen jeweils einer der genannten Stoffklassen oder um Gemische aus Substanzen aus mehreren der genannten Stoffkassen.

Es werden vorzugsweise Aluminate, Titanate oder Titandioxide verwendet, wenn das Bindermaterial vollständig durch das Katalysatormaterial ersetzt wird. Andere Katalysatormaterialien sind ebenfalls geeignet.

Als Bindermaterial werden herkömmliche Materialien, wie z.B. Kaolin, Flußmittel oder Ton verwendet.

Hierbei kann es von Vorteil sein, dem Katalysatormaterial seinerseits einen Haftvermittler zuzugeben, der vorzugsweise ans Flußmittel besteht.

Von besonderem Vorteil hat es sich erwiesen, wenn das Katalysatormaterial mit Promotoren modifiziert ist, bzw., wenn das Katalysatormaterial aus einem Gemisch aus Substanzen der oben genannten Stoffklassen besteht, zumindest eine dieser Substanzen mit Promotoren modifiziert ist.

Als Stützmaterial für die Stülzkörper werden die bekannten Materialien SiC, Mullit oder Aluminiumoxid verwendet.

Vorzugsweise beträgt der Anteil des Stützmaterials 60 bis 90 Gew.-% und der des Katalysator-/Bindermaterials 10 bis 40 Gew.-%. Vorteilhafterweise liegt der Anteil des Stützmaterials bei 65 bis 75 Gew.-% und der des Katalysator-/Bindermaterials bei 25 bis 35 Ciew.-%. Beispielsweise kann das Stützmaterial aus SiC oder Al₂O₃ und das Katalysator-/Bindermaterial aus Tonerdezement (Kalziumaluminat) und Ton bestehen.

Vorzugsweise befindet sich das Katalysatormaterial nur in der zweiten Schicht des Filterelementes.

Das Verfahren zur Herstellung eines solchen Filterelementes, bei dem zuerst der Stützkörper hergestellt und danach die Schicht für die Partikelabscheidung auf den Stützkörper aufgebracht wird, ist dadurch gekennzeichnet, daß das Bindermaterial feinkörnig und homogen mit dem jeweiligen Katalysatonnaterial vermischt wird, daß diese Mischung anschließend mit dem Stützmaterial vermischt wird und daß diese resultierende Mischung dann zur Herstellung des Stützkörpers in Form gebracht und gesintert wird.

Wenn das gesamte Bindermaterial durch Katalysatormaterial ersetzt wird, wird dieses Katalysatormaterial mit dem Stützmaterial vermischt und analog die Formgebung und Sinterung durchgeführt.

Eine weitere Variante des Herstellungsverfahrens sieht vor, daß aus Bindermaterial und Katalysatormaterial Verbundpartikel hergestellt werden, und diese Verbundpartikel anschließend mit dem Stützmaterial vermischt werden. Die resultierende Mischung wird zur Herstellung des Stützkörpers in Form gebracht und gesintert.

Eine weitere Alternative sieht vor, daß mindestens ein pulverförmiges Ausgangsmaterial oder mindestens ein in einer Lösung vorliegendes Ausgangsmaterial, das unter Wärmeeinwirkung Katalysator- und/oder Bindereigenschaften ausbildet, mit dem Stützmaterial vermischt Wird und daß die resultierende Mischung zur Herstellung des Stützkörpers in Form gebracht und gesintert wird. Als pulverförmige Ausgangsmaterialien sind beispielsweise Kalziumoxid und Aluminiumoxid geeignet, aus denen sich Kalziumaluminat bildet.

Aus diesen Acsgangsmatenalien bilden sich erst bei der Sinterung des Filterelementes durch chemische Reaktionen das Katalysatormaterial. Diese Ausgangsstoffe können sowohl Stoffe enthalten, aus denen sich das Katalysatormaterial bildet als auch das Bindermaterial.

Aus Ausgangsmaterialien, die in Lösungen vorliegen, sind insbesondere Kalziumnitrat und Aluminiumnitrat geeignet, aus denen sich Kalziutnaluminat bildet. Es können daher beispielsweise wässrige Nitratlösungen zur Herstellung der Ausgangsmaterialien verwendet werden. Die Lösungen mit den Ausgangsstoffen werden dann gemeinsam mit dem Bindermaterial den Stützmaterialkörnern beigemischt. Das Katalysatormaterial bildet sich bei der Sinterung des Formkörpers.

Beispielsweise bei Sintertemperatur zwischen 1255 und 1350°C, vorzugsweise um 1300°C, versintern die Stützmaterialpartikel nicht miteinander. Nur durch die Versinterung des Binder- und/oder Katalysatormaterials, insbesondere der Verbundpartikel, wird der Halt der Stützmaterialpartikel erzielt.

Vorzugsweise besteht das Katalysatormaterial aus einem oder mehreren Aluminaten, aus einem oder mehreren Titanaten oder aus Titandioxid.

Gemäß einer weiteren Ausführungsform besteht das Katalysatormaterial aus einem oder mehreren Oxiden oder Mischoxiden der seltenen Erden, mit denen die Stützmaterialkörner beschichtet sind.

Es hat sich auch als vorteilhaft erwiesen, wenn das Katalysatormaterial aus einem Gemisch aus mindestens einem Oxid oder Mischoxid der seltenen Erden und mindestens einem Aluminat, einem Titanat oder Titanoxid besteht.

Das Verfahren zur Herstellung eines solchen keramischen Filterelementes gemäß der zweiten Alternative sieht unterschiedliche Verfahrensvarianten vor. Gemäß einer ersten Variante
a) wird für die Herstellung des Stützkörpers Stützmaterial und Katalysatormaterial gemeinsam verwendet, wobei beide Materialien feinkörnig vorliegen und gemischt werden.

Gemäß der zweiten Variante
b) wird nur herkömmliches Stützmaterial verwendet, das feinkörnig vorliegt, wobei die Stützmaterialkörner mit einem oder mehreren Oxiden oder Mischoxiden der seltenen Erden und/oder mit einem oder mehreren Aluminaten, einem oder mehreren Titanaten oder Titandioxid beschichtet werden.

Zur Herstellung des Stützkörpers werden diese derart aufbereiteten Materialien anschließend gesintert.

Die Beschichtung gemäß des Verfahrensschrittes b) wird vorzugsweise mittels der Sol-Cel-Methode durchgeführt. Hierbei können die Stützmaterialkörner in einem Mischer mit dem Sol besprüht werden. Der Vorteil dieser Methode besteht darin, daß die ausgezeichnete Thermoschockbeständigkeit von Siliziumkarbid, das für das Stützmaterial vorzugsweise verwendet wird, genutzt wird und eine kostengünstige gleichmäßige Beschichtung des Ausgangskorns vor dem Brand des Filterelementes mit Katalysator erfolgt. Ebenso ist es von Verteil, bei Wahl des Verfahrensschrittes b) die Beschichtung mittels Anfsprühen eines keramischen Schlickers durchzuführen. Dies geschieht vorzugsweise dadurch, daß in einem Mischer die Stützmaterialkörner mit dem keramischen Schlicker besprüht werden.

In den Verfahrensschritten a) oder b) können zusätzlich die Stützmaterialkörner mit katalytisch aktiven Edel- oder Nichtedelmetallen dotiert werden. Vorzugsweise geschieht dies nach dem Sintern. Nach dem Sintern können auch die Katalysatormaterialkörner mit katalytisch aktiven Edel- oder Nichtedelmetallen dotiert werden (Verfabrensschritte a), b)). Als Materialien für die Dotierung kommen insbesondere Platin, Palladium, Rhodium, Gold, Silber, Nickel, Kupfer. Mangan oder Kobalt in Frage. Die Dotierung dient der gezielten zusätzlichen Erhöhung der katalytischen Aktivität und Selektivität für spezielle chemische Reaktionen.

Die Modifizierung des Katalysatormaterials kann durch naßchemische Dotierungsverfahren oder Gasphasenbeschichtungsverfahren erfolgen.

Der Vorteil der Erfindung besteht darin, daß katalytisch aktive keramische Filterelemente erhalten werden, die hochtempexaturbeständig, dampffest und gegenüber Heteroelementverbindungen resistent sind. Daher können sie unmittelbar im heißen Rasch oder Abgasstrom angeordnet werden und gleichzeitig die Heißgasentstaubung sowie die totale Umwandlung von organischen Schadstoff- und Restkomponenten gewährleisten. Neben dem Gasreinigungseffekt wird damit auch dem Bilden von Dioxinen (DeNovo Synthese) die stoffliche Grundlage genommen.

Die katalytische Ausgestaltung der Filterelemente kann die bifunktionelle Wirkung des Katalysatorsystems, d.h. die Totaloxidation bzw. die thermischkatalytische Spaltung, und damit folgende Reaktionen beinhalten, die vom jeweiligen verwendeten Katalysatormaterial bzw. ggf. verwendeten Dotierungsmaterial abhängen.

Katalytische Reduzierung von Stickoxiden, katalytisches Cracken von langkettigen Kohlenwasserstoffen, katalytischer Abbau von leicht verdampfbaren organischen Verbindungen, Totaloxidation von Kohlenstoff und Kohlenstoffverbindungen usw.. Die katalytische Wirkung der Filterelemente ist jedoch auf diese Anwendungsbereiche nicht beschränkt.

Die typischen Wandstärken des inneren Stützkörpers der Filterkerze liegen zwischen 10 und 15 mm. Die Einsatztemperatur der erfindungsgemäßen Filterkerzen reichen bis zu 1000°C.

Für die erste Schicht, die der Partikelabscheidung dient und auch als Membrauschicht bezeichnet wird, wobei diese Membranschicht katalytisch nicht aktiv ist, wird als Standaidmaterial Mullitkorn verwendet, wobei aber auch andere Materialien zum Einsatz kommen können. Generell sind alle keramischen Oxide, Nitride und Karbide geeignet.

Die Membranschicht kann eine aus mehreren Schichten aufgebaute asymmetrische Membranschicht sein. Die Membranschichtdicke kann bis zu 200 µm betragen, wobei die Porengröße bei 0,05 bis 40 µm liegt. Die Membranschicht wird aus gebundenem Inertkorn oder aus über Polymer-Sol-Gel-Methoden hergestellte Feinpartikel hergestellt. Als Beschichtungsmethoden kommen Besprühen, Elektrophorese, Folienguß, Schlickerguß oder die Sol-Gel-Methode in Frage.

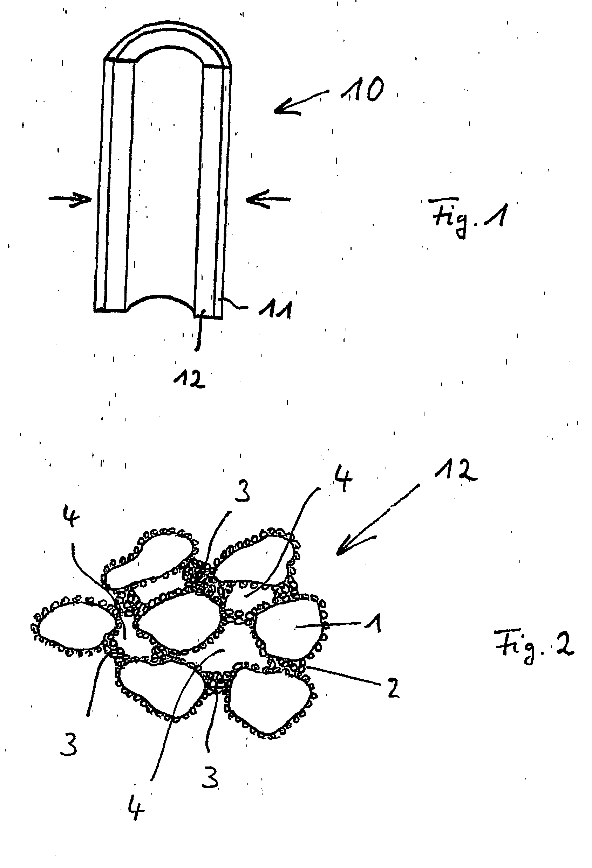

In der Fig. 1 ist eine Filterkerze 10 im Vertikalschnitt dargestellt. Die Filterkerze 10 besitzt eine erste außenliegende Schicht 11 für die Partikelabscheidung und eine zweite innenliegende, den Stützkörper bildende Schicht 12. Die Strömungsrichtung ist mit Pfeilen gekennzeichnet.

In der Fig. 2 ist ein vergrößerter Ausschnitt aus der zweiten Schicht 12 dargestellt. Die Stützmaterialpartikel 1 weisen eine unregelmäßige Form auf und sind beabstandet zueinander angeordnet. Diese Partikel 1 sind über die aus Katalysator- und Bindermaterial bestehenden Partikel 2 miteinander verbunden, die stegartige Brücken 3 bilden. Zwischen den stegartigen Brücken 3 verbleiben Freiräume 4 für den Durchtritt des zu filtrierenden Gases, wobei die Freiräume zur Verdeutlichung größer dargestellt sind. Die hier schematisch dargestellten Partikel 2 sind Verbundpartikel aus Katalysator- und Bindermaterial.

## Patentansprüche

1. Keramisches Filterelement, insbesondere Filterkerze, für die Heißgasfiltration mit einer in Strömungsrichtung ersten Schicht für die Partikelabscheidung und einer zweiten einen Stützkörper bildenden Schicht, die ein Stützmaterial in Form von Partikeln, ein Bindermaterial und ein Katalysatormaterial aufweist, **dadurch gekennzeichnet,**
**daß** das Bindermaterial Katalysatormaterial aufweist oder mindestens teilweise durch das Katalysatormaterial ersetzt ist und daß die Stützmaterialpartikel (1) über das Katalysator- und/oder Bindermaterial miteinander verbunden sind.

2. Filterelement nach Anspruch 1, **dadurch gekennzeichnet, daß** die Katalysator- und die Bindermaterialien als Verbundpartikel (2) vorliegen.

3. Filterelement nach Anspruch 2, **dadurch gekennzeichnet, daß** die Verbundpartikel (2) aus 90-99 Gew.-% Katalysatormaterial und Rest Bindermaterial bestehen.

4. Filterelement nach einem der Ansprüche 1 bis 3, **dadurch gekennzeichnet, daß** das Katalysatormaterial aus einem oder mehreren Oxiden der seltenen Erden und/oder aus einem oder mehreren Aluminaten und/oder einem oder mehreren Silikaten besteht.

5. Filterelement nach Anspruch 1, **dadurch gekennzeichnet, daß** bei einem vollständigen Ersatz des Bindermaterials das Katalysatormaterial aus einem oder mehreren Aluminaten, einem oder mehreren Titanaten oder Titandioxid besteht.

6. Filterelement nach Anspruch 4 oder 5, **dadurch gekennzeichnet, daß** das Katalysatormaterial aus mindestens Kalziumaluminat besteht.

7. Filterelement nach einem der Ansprüche 1 bis 6, **dadurch gekennzeichnet, daß** dem Katalysatormaterial ein Haftvermittler zugegeben ist.

8. Filterelement nach einem der Ansprüche 1 bis 7, **dadurch gekennzeichnet, daß** das Katalysatormaterial mit Promotoren modifiziert ist.

9. Filterelement nach einem der Ansprüche 1 bis 8, **dadurch gekennzeichnet, daß** das Stützmaterial aus SiC, Mullit oder Aluminiumoxid besteht.

10. Filterelement nach einem der Ansprüche 1 bis 9, **dadurch gekennzeichnet, daß** der Anteil des Stützmaterials 60-90 Gew.-% und der der Katalysator-Binder-Materialien 10-40 Gew.-% beträgt.

11. Filterelement nach einem der Ansprüche 1 bis 10, **dadurch gekennzeichnet, daß** die Stützmaterialkörner mit katalytisch aktiven Edel- oder Nichtedelmetallen dotiert sind.

12. Filterelement nach einem der Ansprüche 1 bis 11, **dadurch gekennzeichnet, daß** die Katalysatorkörner mit katalytisch aktiven Edel- oder Nichtedelmetallen dotiert sind.

13. Filterelement nach Anspruch 11 oder 12, **dadurch gekennzeichnet, daß** die Dotierung mit Platin, Palladium, Rhodium, Gold, Silber, Nickel, Kupfer, Mangan oder Kobalt durchgeführt ist.

14. Verfahren zur Herstellung eins keramischen Filterelements, insbesondere einer Filterkerze, nach einem der Ansprüche 1 bis 13 für die Heißgasfiltration mit einer in Strömungsrichtung ersten Schicht für die Partikelabscheidung und einer zweiten den Stützkörper bildenden Schicht, die ein Stützmaterial, ein Bindermaterial und ein Katalysatormaterial aufweist, bei dem zuerst der Stützkörper hergestellt und danach die Schicht für die Partikelabscheidung auf den Stützkörper aufgbracht wird, **dadurch gekennzeichnet,**
**daß** das Bindermaterial feinkörnig und homogen mit dem Katalysatormaterial vermischt wird,
**daß** diese Mischung anschließend mit dem Stützmaterial vermischt wird, und
**daß** die resultierende Mischung zur Herstellung des Stützkörpers in Form gebracht und gesintert wird.

15. Verfahren nach Anspruch 14, wobei anstelle des Mischens von Binder- und Katalysatormaterial aus Bindermaterial und Katalysatormaterial Verbundpartikel (2) hergestellt werden,
daß diese Verbundpartikel (2) anschließend mit dem Stützmaterial vermischt werden, und
daß die resultierende Mischung zur Herstellung des Stützkörpers in Form gebracht und gesintert wird.

## Claims

1. Ceramic filter element, in particular filter candle, for hot gas filtration, having a first layer, as seen in the direction of flow, for separating out particles and a second layer which forms a supporting body and has a supporting material in the form of particles, a binder material and a catalyst material, **characterized**
**in that** the binder material includes catalyst material or is at least partially replaced by the catalyst material, and in that the supporting material particles (1) are joined to one another by the catalyst and/or binder material.

2. Filter element according to Claim 1, **characterized in that** the catalyst and binder materials are in the form of composite particles (2).

3. Filter element according to Claim 2, **characterized in that** the composite particles (2) consist of 90-99% by weight catalyst material, remainder binder material.

4. Filter element according to one of Claims 1 to 3, **characterized in that** the catalyst material consists of one or more oxides of the rare earths and/or of one or more aluminates and/or one or more silicates.

5. Filter element according to Claim 1, **characterized in that** if the binder material is completely replaced, the catalyst material consists of one or more aluminates, one or more titanates or titanium dioxide.

6. Filter element according to Claim 4 or 5, **characterized in that** the catalyst material consists of at least calcium aluminate.

7. Filter element according to one of Claims 1 to 6, **characterized in that** a bonding agent is added to the catalyst material.

8. Filter element according to one of Claims 1 to 7, **characterized in that** the catalyst material is modified with promoters.

9. Filter element according to one of Claims 1 to 8, **characterized in that** the supporting material consists of SiC, mullite or aluminium oxide.

10. Filter element according to one of Claims 1 to 9, **characterized in that** the proportion of supporting material amounts to 60-90% by weight and the proportion of the catalyst/binder materials amounts to 10-40% by weight.

11. Filter element according to one of Claims 1 to 10, **characterized in that** the supporting material grains are doped with catalytically active precious or non-precious metals.

12. Filter element according to one of Claims 1 to 11, **characterized in that** the catalyst grains are doped with catalytically active precious or non-precious metals.

13. Filter element according to Claim 11 or 12, **characterized in that** the doping is carried out with platinum, palladium, rhodium, gold, silver, nickel, copper, manganese or cobalt.

14. Process for producing a ceramic filter element, in particular a filter candle, according to one of Claims 1 to 13, for hot gas filtration having a first layer, as seen in the direction of flow, for separating out particles and a second layer, which forms the supporting body and includes a supporting material, a binder material and a catalyst material, wherein first of all the supporting body is produced, and then the layer for separating out particles is applied to the supporting body, **characterized**
**in that** the binder is mixed homogenously and in fine-grain form with the catalyst material,
**in that** this mixture is then mixed with the supporting material, and
**in that** the resulting mixture is shaped and sintered to produce the supporting body.

15. Process according to Claim 14, in which instead of mixing binder and catalyst material, composite particles (2) are produced from binder material and catalyst material,
in that these composite particles (2) are then mixed with the supporting material, and
in that the resulting mixture is then shaped and sintered to produce the supporting body.

## Revendications

1. Elément filtrant en céramique, en particulier filtre en forme de bougie, pour la filtration de gaz chaud, avec une première couche dans la direction de courant pour la séparation de particules et une deuxième couche formant le corps support, qui présente un matériau support en forme de particules, un matériau liant et un matériau catalyseur, **caractérisé en ce que** le matériau liant présente un matériau catalyseur ou est au moins remplacé en partie par le matériau catalyseur, et **en ce que** les particules (1) du matériau support sont liées les unes avec les autres via le matériau catalyseur et/ou le matériau liant.

2. Elément filtrant selon la revendication 1, **caractérisé en ce que** les matériaux catalyseur et liant sont présents comme particules liantes (2).

3. Elément filtrant selon la revendication 2, **caractérisé en ce que** les particules liantes (2) sont constituées de 90 à 99 % en poids de matériau catalyseur et le reste en matériau liant.

4. Elément filtrant selon l'une des revendications 1 à 3, **caractérisé en ce que** le matériau catalyseur est constitué d'un ou de plusieurs oxydes de terres rares et/ou d'un ou de plusieurs aluminates et/ou d'un ou de plusieurs silicates.

5. Elément filtrant selon la revendication 1, **caractérisé en que**, avec le remplacement complet du matériau liant, le matériau catalyseur est constitué d'un ou de plusieurs aluminates, d'un ou de plusieurs titanates ou de dioxyde de titane.

6. Elément filtrant selon la revendication 4 ou 5, **caractérisé en ce que** le matériau catalyseur est constitué d'au moins un aluminate de calcium.

7. Elément filtrant selon l'une des revendications 1 à 6, **caractérisé en ce qu'**un agent d'adhérence est ajouté au matériau catalyseur.

8. Elément filtrant selon l'une des revendications 1 à 7, **caractérisé en ce** le matériau catalyseur est modifié par de promoteurs.

9. Elément filtrant selon l'une des revendications 1 à 8, **caractérisé en ce** le matériau support est constitué de SiC, de mullite ou d'oxyde d'aluminium.

10. Elément filtrant selon l'une des revendications 1 à 9, **caractérisé en ce que** la proportion de matériau support est de 60 à 90 % en poids et les matériaux catalyseur-liant est de 10 à 40 % en poids.

11. Elément filtrant selon l'une des revendications 1 à 10, **caractérisé en ce que** les grains de matériau support sont dopés par des métaux de terre rare ou non de terre rare actifs catalytiquement.

12. Elément filtrant selon l'une des revendications 1 à 11, **caractérisé en ce que** les grains de catalyseur sont dopés par des métaux de terre rare ou non de terre rare actifs catalytiquement.

13. Elément filtrant selon la revendication 11 ou 12, **caractérisé en ce que** le dopage est effectué par du platine, du palladium, du rhodium, de l'or, de l'argent, du nickel, du cuivre, du manganèse ou du cobalt.

14. Procédé de préparation d'un élément filtrant en céramique, en particulier un filtre en forme de bougie, selon l'une des revendication 1 à 13 pour la filtration de gaz chaud avec une première couche dans la direction de courant pour la séparation de particules et une deuxième couche formant le corps support, qui présente un matériau support en forme de particules, un matériau liant et un matériau catalyseur, selon lequel on prépare d'abord le corps support et ensuite on dépose la couche pour la séparation de particules sur le corps support, **caractérisé en ce qu'**on granule finement le matériau liant et on le mélange de manière homogène avec le catalyseur, on mélange ensuite ce mélange avec le matériau support, et on met en forme le mélange résultant pour la préparation du corps support et on le fritte.

15. Procédé selon la revendication 14, dans lequel à la place du mélange du matériau liant et du matériau catalyseur on prépare des particules liantes (2) en matériau liant et matériau catalyseur, on mélange ensuite ces particules liantes (2) avec le matériau support, et on met en forme le mélange résultant pour la préparation du corps support et on le fritte.
